**Europäisches Patentamt**

**European Patent Office**

**Office européen des brevets**

(19)

(11) Veröffentlichungsnummer : **0 407 413 B1**

(12) # EUROPÄISCHE PATENTSCHRIFT

(45) Veröffentlichungstag der Patentschrift :
**03.06.92 Patentblatt 92/23**

(51) Int. Cl.$^5$ : **G01L 19/02, G01L 1/22, G01L 9/04**

(21) Anmeldenummer : **89903480.5**

(22) Anmeldetag : **21.03.89**

(86) Internationale Anmeldenummer :
**PCT/EP89/00302**

(87) Internationale Veröffentlichungsnummer :
**WO 89/09385 05.10.89 Gazette 89/24**

(54) **DRUCK- ODER KRAFTMESSVORRICHTUNG.**

(30) Priorität : **24.03.88 DE 3809974**

(43) Veröffentlichungstag der Anmeldung :
**16.01.91 Patentblatt 91/03**

(45) Bekanntmachung des Hinweises auf die
Patenterteilung :
**03.06.92 Patentblatt 92/23**

(84) Benannte Vertragsstaaten :
**AT BE CH DE FR GB IT LI LU NL SE**

(56) Entgegenhaltungen :
**DE-A- 2 740 685**
**DE-A- 2 802 176**
**FR-A- 1 519 874**
**US-A- 3 201 983**

(56) Entgegenhaltungen :
**US-A- 4 155 265**
**US-A- 4 604 544**
**Instruments And Control Systems, vol. 43, No:
2, February 1970, Chilton Company (Radnor,
US), F.L. Crosswy et al.: "Dynamicforce measurement techniques", pages 81-83**

(73) Patentinhaber : **ZACH, Johann**
**Fasanenweg 10**
**W-8068 Pfaffenhofen (DE)**

(72) Erfinder : **FURTMAYER, Karl**
**Hauptplatz 3**
**W-8068 Pfaffenhofen (DE)**

(74) Vertreter : **Glawe, Delfs, Moll & Partner
Patentanwälte**
**Postfach 26 01 62 Liebherrstrasse 20**
**W-8000 München 26 (DE)**

EP 0 407 413 B1

## Beschreibung

Die Erfindung betrifft eine Druck- oder Kraftmeßvorrichtung von der im Oberbegriff des Anspruchs 1 angegebenen Art.

Beim Messen von zeitlich veränderlichen Drücken treten aufgrund von Massenbeschleunigungen im mechanischen Teil derartiger Drucksensoren Meßfehler auf. Druckstöße, stochastische Druckverläufe sowie äußere Störungen, z.B. auf das Gehäuse wirkende Schwingungen, führen zu immer neuen Einschwingvorgängen. Während dieser Einschwingvorgänge sind die angezeigten Meßwerte mit dynamischen Fehlern behaftet. Grundsätzlich reagiert der Drucksensor aufgrund seiner Konstruktion, bestehend aus der Masse des druckbeaufschlagten Teils und der Rückstellkraft des als Feder wirkenden Kraftmeßelements, mit einem dynamischen Verhalten, welches einem gedämpften Feder-Masse-System entspricht.

Aus der DE-PS 694 803 ist ein Drucksensor der eingangs genannten Art bekannt, bei dem der vom Meßdruck beaufschlagte Meßkörper und ein Referenzkörper jeweils über piezoelektrische Meßelemente am Gehäuse abgestützt sind, wobei die Meßsignale der beiden Kraftmesser einander subtraktiv überlagert werden. Wenn während einer Druckmessung Erschütterungskräfte auf das Gehäuse einwirken, werden diese über die beiden Kraftmeßelemente auf Meßkörner und Referenzkörper übertragen und erzeugen in den Kraftmeßelementen gleichgroße und gleichgerichtete Signale, die sich gegenseitig aufheben, so daß nur die vom Meßdruck auf den Meßkörper ausgeübte Druckkraft gemessen wird. Mit dieser Anordnung können aber prinzipiell nur die auf das Gehäuse wirkenden Beschleunigungskräfte aus der Messung ausgeschlossen werden. Dynamische Meßfehler, die auf plötzlichen Änderungen des zu messenden Druckes beruhen, werden nicht erfaßt. Aber auch die dynamischen Anteile der auf das Gehäuse wirkenden Kräfte werden nur dann vollständig ausgeglichen, wenn man im Idealfalle eine exakt synchrone Bewegung von Meßkörper und Referenzkörper bei Gehäuseerschütterungen voraussetzt. Im realen Fall werden wegen ungleicher Massen, Materialdämpfung usw. notwendigerweise Phasenverschiebungen von Meß- und Referenzkörper auftreten, die das Meßergebnis verfälschen.

Der Erfindung liegt die Aufgabe zugrunde, einen Druck- oder Kraftsensor der angegebenen Art von möglichst einfachem und kostengünstigem Aufbau so auszubilden, daß ein vom dynamischen Eigenverhalten des Sensors möglichst unverfälschtes Meßergebnis, insbesondere bei rasch wechselnden Meßdrücken oder -kräften erzielt wird.

Die Lösung der Aufgabe ist inz Anspruch 1 angegeben. Die Unteransprüche beziehen sich auf vorteilhafte weitere Ausgestaltungen der Erfindung.

Durch die Erfindung werden die vom dynamischen Feder-Masse-Verhalten des Sensors erzeugten Kraftanteile erfaßt und in der Auswerteschaltung kompensiert, so daß das erhaltene Meßsignal im wesentlichen exakt den zeitlichen Verlauf der zu messenden Kraft wiedergibt. Dies geschieht dadurch, daß mittels der Auswertungseinrichtung in jedem Zeitpunkt das dynamische Kräftegleichgewicht für beide Massen mindestens in vereinfachter Näherung, gemäß der weiteren Ausgestaltung sogar exakt, berechnet wird.

Ein weiterer Vorteil der Erfindung besteht darin, daß der Druck- oder Kraftsensor im wesentlichen ohne Dämpfung ausgeführt werden kann. Bisher übliche Druck- oder Kraftsensoren bedürfen aufgrund ihres dynamischen Verhaltens einer Dämpfung, um den Einfluß der Einschwingvorgänge auf das Meßergebnis möglichst gering zu halten. Eine solche Dämpfung im Sensorsystem unterdrückt aber auch die Kraftspitzen des zu messenden Kraftverlaufs und führen insbesondere bei hochfrequenten Druck- oder Kraftverläufen zu fehlerhafter Messung. Die Erfindung erlaubt eine praktisch dämpfungsfreie Ausführung des Sensors, so daß dieser im wesentlichen verzögerungsfrei auf Kraft- oder Druckänderungen ansprechen kann.

Ausführungsformen der Erfindung werden anhand der Zeichnungen näher erläutert. Es zeigt :

Fig. 1 einen schematischen Schnitt durch eine erste Ausführungsform eines erfindungsgemäßen Druck- oder Kraftsensors;

Fig. 2 eine vereinfachte Prinzipskizze des Sensors nach Fig. 1 zur Veranschaulichung der auftretenden Kräfte aus Auslenkungen;

Fig. 3 das Prinzipschema einer Auswertung für den Sensor nach Fig. 1;

Fig. 4 ein Detail einer abgeänderten Ausführungsform des Sensors nach Fig. 1;

Fig. 5 das Schema einer Auswerteschaltung für die Ausführungsform nach Fig. 4;

Fig. 6 in ähnlicher Darstellung wie Fig. 1 einen Schnitt durch eine geänderte Ausführungsform des Druck- oder Kraftsensors.

Fig. 7a eine getrennte Darstellung der Bestandteile des Sensors nach Fig. 6 und

Fig. 7b die zugehörige Prinzinskizze zu Herleitung der Kräftegleichungen;

Fig. 8 eine Skizze zur Berücksichtigung der Dämpfungskräfte;

Fig. 9 das Schema einer Auswerteschaltung für die Aus führungsform nach Fig. 6;

Fig. 10 und 11 zwei abgewandelte Ausführungsformen des Druck- sensors nach Fig. 6.

EP 0 407 413 B1

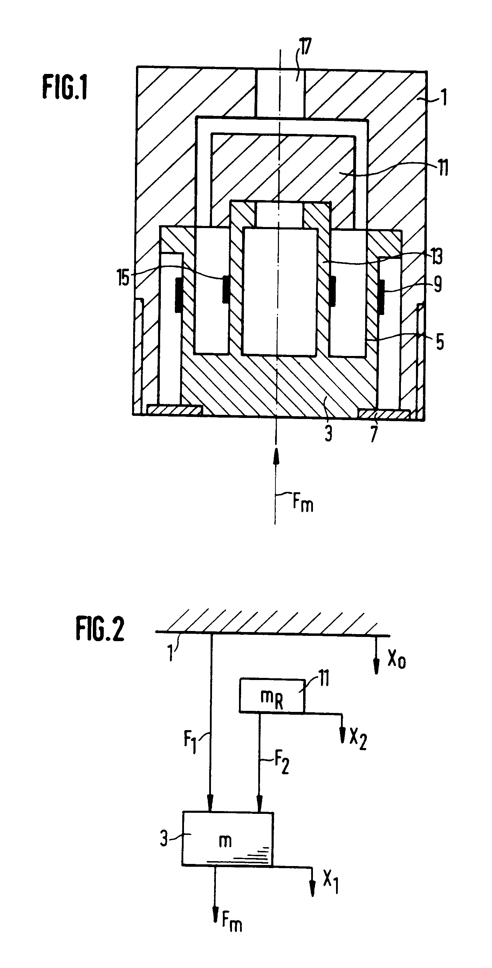

Gemäß Fig. 1 ist in einem z.B. zylindrischen Gehäuse 1 ein Meßkörper 3 mittels eines z.B. rohrförmigen, ersten federelastischen Kraftelementes 5 abgestützt. Auf die Stirnfläche des Meßkörpers 3, die gegen das Gehäuse 1 mittels einer Membrane 7 abgedichtet ist, wirkt der zu messende Druck und übt eine Druckkraft $F_m$ aus. Falls der Sensor als Kraftsensor benutzt werden soll, kann die zu messende Kraft $F_m$ mittels geeigneter Elemente auf den Meßkörper 3 übertragen werden. Die durch die Kraft $F_m$ verursachte Längenänderung des Kraftmeßelementes 5 kann mittels Dehnungsmeßstreifen 9 erfaßt werden.

Im Inneren des Gehäuses 1 ist ein der zu messenden Kraft $F_m$ nicht ausgesetzter Referenzkörper 11 angeordnet. Er ist bei der gezeigten Ausführungsform durch ein zweites elastisches, verformbares Kraftmeßelement 13 gegen den Meßkörper 3 abgestützt, und ein der Längenänderung des Kraftmeßelementes 13 proportionales Signal kann mittels Dehnungsmeßstreifen 15 abgegriffen werden. Elektrische Anschlüsse von den Dehnungsmeßstreifen 9, 15 (nicht dargestellt) können durch eine Echrung 17 im Gehäuse 1 herausgeführt werden.

Anstatt die Kraftmeßelemente 5, 13 als Federelemente mit Dehnungsstreifen auszubilden, wie dargestellt, können sie in an sich bekannter Weise auch in Form von z.B. piezoelektrischen Elementen, induktiven Kraftgebern und dgl. ausgebildet werden.

In Fig. 2 sind schematisch die auf Gehäuse 1, Meßkörper 3 und Referenzkörper 11 wirkenden Kräfte dargestellt. Wenn die in den Kraftmeßelementen 5 und 13 gemessenen Kräfte mit $F_1$ bzw. $F_2$, die Massen von Meßkörper 3 und Referenzkröper 11 mit m bzw. $m_r$ und die Auslenkungen des Gehäuses 1, des Meßörpers 3 und des Referenzkörpers 11 mit $x_0$, $x_1$ bzw. $x_2$ bezeichnet werden, wie in Fig. 1 dargestellt, dann ergeben sich die folgenden Beziehungen:

Dynamisches Gleichgewicht am Meßkörper 3:

$$F_m - F_1 - F_2 = m\,\ddot{x}_1 \qquad (1)$$

Dynamisches Gleichgewicht am Referenzkörper 11:

$$F_2 = m_R\,\ddot{x}_2 \qquad (2)$$

Längenänderung des Kraftmeßelementes 13 zwischen Meß- und Referenzkörper:

$$F_2 = c_2\,(x_1 - x_2) \qquad (3)$$

wobei $c_2$ die Federkonstante des Kraftmeßelementes 13 ist.

Durch zweimaliges Differenzieren der Gleichung (3) und Zusammenfassung mit (1) und (2) erhält man:

$$F_m = F_1 + F_2\left(1 + \frac{m}{m_R}\right) + \ddot{F}_2 \cdot \frac{m}{c_2} \qquad (4)$$

deren letztes Glied ein Korrekturglied für alle durch das dynmische Eigenverhalten des Sensors verursachten Meßfehler darstellt.

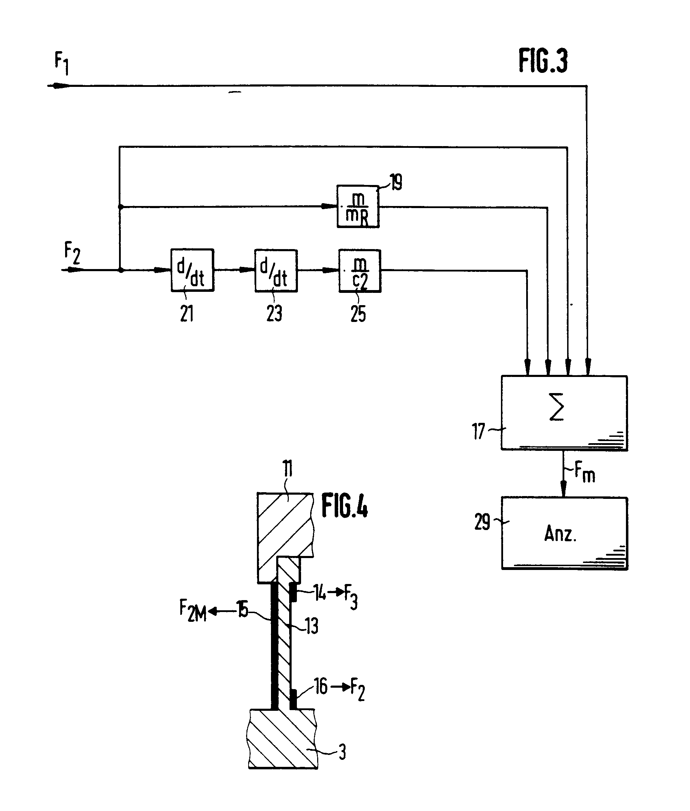

Fig. 3 zeigt ein Ausführungsbeispiel für eine Auswerteschaltung, mit der die am ersten und zweiten Kraftmeßelement 5 bzw. 13 abgegriffenen Signale $F_1$ und $F_2$ entsprechend der Formel (4) zu dem der anliegenden Kraft $F_m$ entsprechenden Meßsignal verarbeitet werden können. Einem Summationsglied 17 werden das Signal $F_1$ und das Signal $F_2$ direkt zugeführt. Ferner wird das Signal $F_2$ in einem Multiplizierglied 19 mit dem Quotienten der Massen m und $m_R$ des Meßkörpers und Referenzkörpers multipliziert und dem Summationsglied 17 zugeführt. Schließlich wird das Signal $F_2$ in zwei Differenziergliedern 21, 23 zweimal differenziert und in einem Multiplikationsglied 25 mit dem Quotienten aus der Masse m des Meßkörpers und der Federkonstanten $c_2$ des zweiten Kraftmeßelementes 13 multipliziert und schließlich dem Summationsglied 17 zugeführt. Durch Summierung der Eingangswerte bildet das Summationsglied 17 ein der Meßkraft $F_M$ proportionales Ausgangssignal, welches in einem Anzeigeglied 29 zur Anzeige gebracht und/oder registriert werden kann. Die verschiedenen Rechenglieder der Auswerteschaltung brauchen nicht, wie dargestellt, als getrennte analoge Schaltungselemente ausgebildet sein, sondern es ist selbstverständlich auch eine entsprechende digitale Signalverarbeitung der Signale $F_1$ und $F_2$ entsprechend der Fromel (4) in einem Mikroprozessor oder dgl. Rechner, unter vorheriger Analod-Digital-Umwandlung der Signale, möglich.

Bei der anhand Fig. 1 bis 3 beschriebenen Ausfürungsform werden die Einflüsse der Massen m und $m_R$ von Meßkörper und Referenzkörper berücksichtigt. Je nach der Konstruktion des Sensors und dem zu erfassenden Frequenzbereich können aber auch die Eigenmassen der Kraftmeßelemente 9, 13 das dynamische Verhalten mit beeinflussen. In diesem Fall müssen in der Kräftebilanz auch die von den Beschleunigungen

3

der Kraftmeßelemente 9, 13 herrührenden Kräfte mit berücksihtig werden. Das gilt insbesondere für das die Kräfte zwischen Meßkörper 3 und Referenzkörper 11 übertragende Kaftmeßelemente 13. In Fig. 4 ist das Detail einer geänderten Ausführngsform des Sensors nach Fig. 1 dargestellt, bei der mit zusätzlichen Dehnungsmeßstreifen 14, 16 getrennt die Kräfte $F_2$ und $F_3$ gemessen werden können, die vom Kraftmeßelement 13 auf den Meßkörper 3 bzw. auf den Referenzkörper 11 übertragen werden. Der Dehnungsmeßstreifen 15 estecktsich über die ganze Federlänge des Kraftmeßelements 13 und erfaßt die der Relativbewegung von Meßkörper 3 und Referenzkörper 11 entsprechende Kraft $F_{2M}$. Die Ungleichheit der Kräfte $F_2$ und $F_3$ beruht auf der Massenträgheit des Hraftmeßelements 13 bei Beschleunigung.

Für die Ausführungsform nach Fig. 4 sind die vorgennanten Gleichungen (1) bis (4) wie folgt abzuändern:

$$F_m - F_1 - F_2 = m \cdot \ddot{x}_1 \qquad (1')$$

$$F_3 = m_R \, \ddot{x}_2 \qquad (2')$$

$$F_{2M} = c_2 (x_1 - x_2) \qquad (3')$$

$$F_m = F_1 + F_2 + F_3 \cdot \frac{m}{m_R} + \dot{F}_{2M} \cdot \frac{m}{c_2} \qquad (4')$$

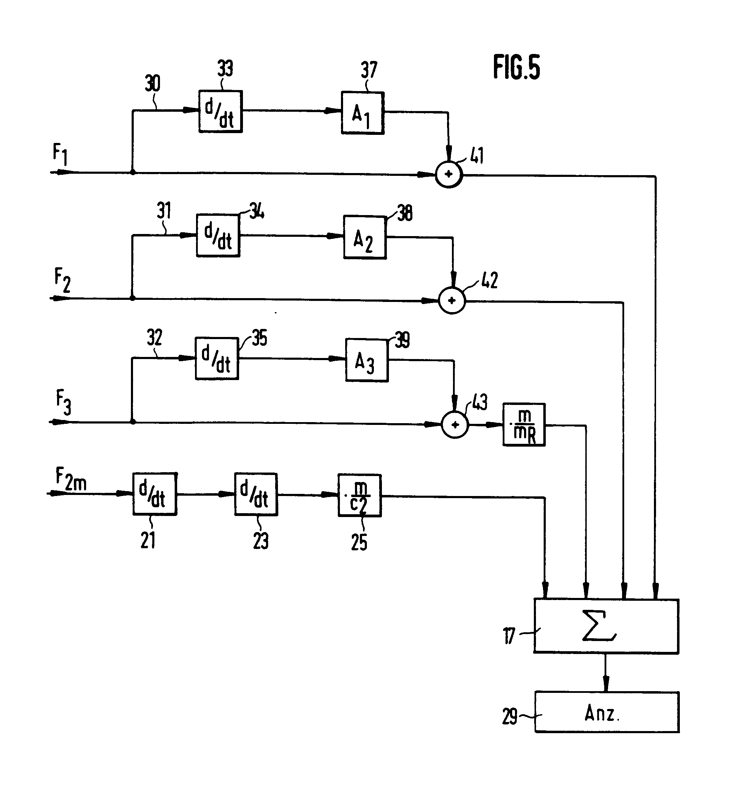

Fig. 5 zeigt das Schema einer Auswerteschaltung, die die Kraftsigiale $F_1$ , $F_2$, $F_3$ und $F_{2M}$ gemäß der Beziehung (4′) verknüpt und außerdem die in dem System unvermeidliche Materialdämpfung in den Federkörpern berücksichtigt. Hierbei wird davon ausgegangen, daß zu den Kräften $F_1$, $F_2$, $F_3$ jeweils eine entsprechende Dämpfungskraft $D_1$, $D_2$, $D_3$ hinzugefügt werden muß, wobei jede Dämpfungskraft gemäß der Formel

$$D_i = K_i \cdot \dot{x}_1 \qquad (5)$$

von der jeweiligen Materialdämpfungsfungskonstante Ki und von der jeitlichen Ableitung $\dot{x}_i$ der Auslenkung $x_i$ abhängt, wobei letztere wiederum nach der Formel

$$x_i = \frac{F_i}{C_i}$$

gleich dem Quotienten aus der Kraft $F_i$ und der Federkonstanten $c_i$ ist. Ist die axiale Länge $l_{DMS}$ des jeweiligen Dehnungsmeßstreifens kleiner als die Länge $l_K$ des zugehörigen Kraftmeßelements (Federkörpers), dann ist die vom Dehnungsmeßstreifen erfaßte örtliche Auslenkung

$$x_{i,ö} = \frac{F_i}{c_i} \cdot \frac{l_{DMS,i}}{l_{K,i}} \qquad (6A)$$

und aus (6a) und (5) ergibt sich die örtliche Dampfungskraft

$$D_{i,ö} = \dot{F}_i \cdot \frac{F_i}{c_i} \cdot \frac{l_{DMS,i}}{l_{K,i}} \qquad (5a)$$

Wird

$$A_i = \frac{K_i}{c_i} \cdot \frac{l_{DMS,i}}{l_{K,i}} \qquad (7)$$

gesetzt, so erhält man statt der Formel (4′) die um die Dämpfungskräfte erweiterte Formel:

$$F_m = F_1 + A_1\dot{F}_1 + F_2 + A_2\dot{F}_2 + \frac{m}{m_R} \cdot F_3 + \frac{m}{m_R} \cdot A_3\dot{F}_3 + \frac{m}{c_2} \cdot \ddot{F}_{2M} \qquad (4'')$$

In der Auswerteschaltung nach Fig. 5 werden die Dämpfungskräfte durch zusätzliche Schaltungszweige 30, 31, 32 mit Differenziergliedern 33, 34, 35 und Multipliziergliedern 37, 38, 39 sowie Summiergliedern 41, 42 43 berücksichtigt.

Falls z. B. bei Verwendung sehr dämpfungsarmer Kraftmeßelemente eine Berücksichtung der Dämfungskräfte nicht erforlich ist, erhält man aus Fig. 5 durch Weglassen der Schaltungszweige 30, 31, 32 eine vereinfachte Auswerteschaltung für die Ausführungsform nach Fig. 4.

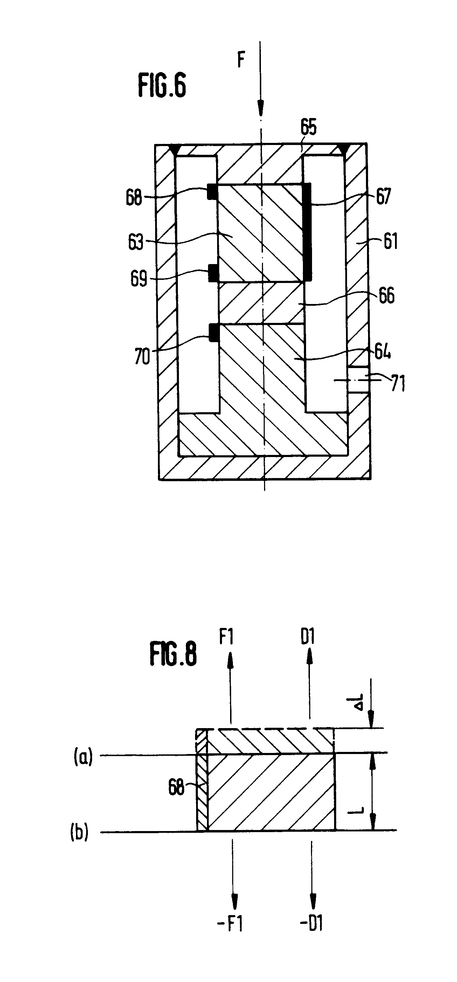

Fig. 6 zeigt eine abgeänderte Ausführungsform der Druck- oder Kraftmeßvorrichtung. Bei dieser Ausführungsform ist der Meßkörper 65, auf den die Druckkraft F einwirkt, über das Kraftmeßelement 63 gegen den Referenzkörper 66 und dieser wiederum über das zweite Kraftmeßelement 64 gegen das Gehäuse 61 abgestützt. Die Kraftmeßelemente 63, 64 sind hier nicht rohrförmig,sondern aus Vollmaterial hergestellt, können aber zweckmäßigerweise aus einem anderen Material als Meßkörper 65 und Referenzkörper 66 bestehen. Die Verformungen der Kraftmeßelemente 63, 64, die bei Relativbewegungen von Meßkörper 65 und Referenzkörper 66 gegeneinander und gegen das Gehäuse 61 auftreten, und die den dabei auftretenden Kräften proportional sind, können mittels Dehnungsmeßstreifen 67, 68, 69, 70 erfaßt werden. Die von diesen ausgehenden (nicht dargestellten) Signalleitungen können durch eine Bohrung 71 aus dem Gehäuse 61 herausgeführt werden.

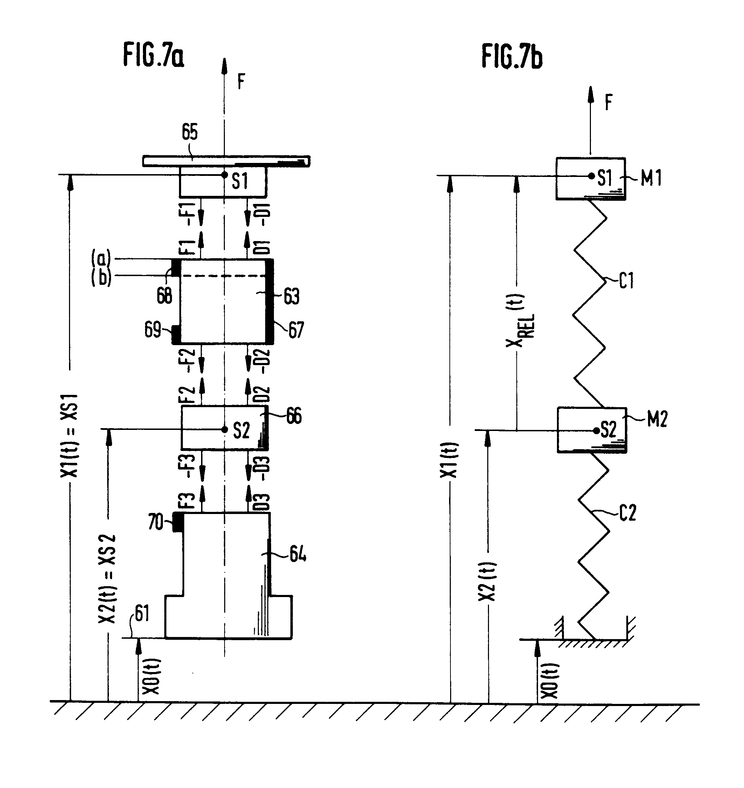

In Fig. 7a sind die Bestandteile des Drucksensors nach Fig. 6 getrennt voneinander dargestellt. Die an den Schnittflächen zwischen den einzelnen Bestandteilen angreifenden Verformungskräfte F1, F2, F2, Dämpfungskräfte D1, D2, D3 und die entsprechenden Auslenkungskoordinaten X1, X2 für die Massenschwerpunkte $S_1$, $S_2$ sowie X0 für das Gehäuse sind angegeben. Die Massen des Meßkörpers 65 und Referenzkörpers 66 seien mit M1 und M2 bezeichnet. Durch Anwendung des Massenschwerpunktsatzes der Mechanik ergeben sich dann die folgenden Beziehungen :

Dynamisches Gleichgewicht für Masse M1 und M2 :

$$F - F1 - D1 = M1 \cdot \ddot{X}1 \qquad (11)$$

$$F2 + D2 - F3 - D3 = M2 \cdot \ddot{X}2 \qquad (12)$$

Kinematische Beziehung zwischen den Massen M1 und M2:

$$X1 = X2 + Xrel \qquad (13a)$$

$$\ddot{X}1 = \ddot{X}2 + \ddot{X}rel \qquad (13)$$

Die Beziehung (13) ist allgemein bekannt als "Absolutbeschleunigung = Führungsbeschleunigung + Relativbeschleunigung", angewandt auf die Bewegung zwischen den Massen M1 und M2.

Wird Ausdruck(13) und (12) nach entsprechender Umformung in Ausdruck (11)eingesetzt erhält man :

$$F = F1 + D1 + (M1/M2) \cdot (F2 + D2 - F3 - D3) + M1 \cdot \ddot{X}rel \qquad (14)$$

deren letztes Glied ein Korrekturglied für alle durch das dynamische Eigenverhalten des Sensors verursachten Meßfehler darstellt.

Nach Fig. 7a werden die Kräfte F1, F2 und F3 durch die Dehnmeßstreifen 68, 69 und 70 erfaßt. Hierbei sollten möglichst kurze Meßstreifen eingesetzt werden, damit eine der Ableitung zugrundeliegende exakte Bestimmung der in den Übergangsquerschnitten der Federkörper 63, 64 und der Massen 65, 66 wirkenden Kräfte gewährleistet ist.

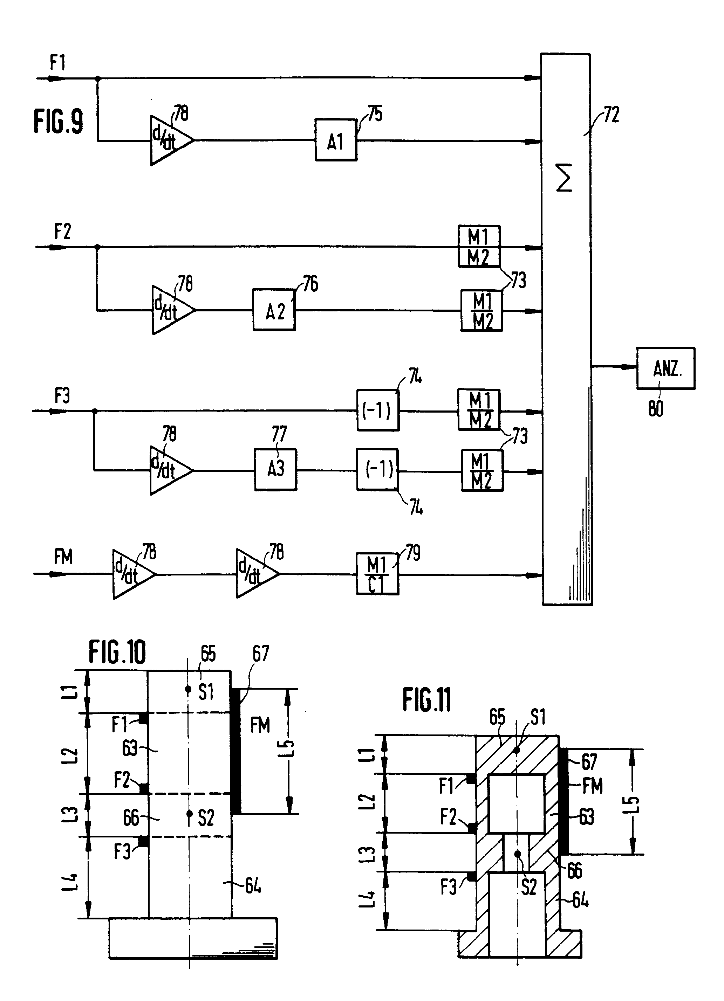

Die (inneren) Materialdämpfungskräfte D1, D2 und D3 in den Kraftmeßelementen werden anhand Fig. 8 hergeleitet.

Auf den dargestellten Abschnitt des Kraftmeßelementes 63 von der Länge L, die gleich der Länge des Dehnungsmestreifens 68 ist,wirkt die Kraft F1 und erzeugt die Längenänderung

$$\Delta L = F1/C1 \qquad (15)$$

wobei C1 die Federkonstante des Längenabschnitts L ist. Durch die Verformung tritt die Dämpfungskraft D1 auf, die proportional der Verformungsgeschwindigkeit ist :

$$D1 = \frac{d(\Delta L)}{dt} \cdot K1 \qquad (16)$$

wobei K1 eine Materialdämpfungskonstante ist. Aus (15) und (16) ergibt sich

$$D1 = \frac{d(F1)}{dt} \cdot A1 \qquad (17)$$

wobei A1 = K1/C1 eine Konstante ist. Für die Dämpfungskräfte D2 und D3 am Ort der Dehnungsmeßstreifen 69 und 70 gilt Gleichung (17) analog.

Das Korrekturglied $M_1 \cdot \ddot{X}_{rel}$ von Gleichung (14), das die Beschleunigung der Massenschwerpunkte S1, S2 relativ zueinander berücksichtigt, läßt sich aus dem Meßsignal des Dehnungsstreifens 67 wie folgt herleiten. Dieses Ausgangssignal kann gleich einer Kraft $F_M$ gesetzt werden, die im Kraftmeßelement 63 von der Länge

$L_M$ die Längenänderung $\Delta L_M$ hervorruft :

$$F_M = \Delta L_M \cdot C_M \quad (18)$$

wobei $C_M$ die Federkonstante des Kraftmeßelementes über dessen Länge $L_M$ ist.Unter Vernachlässigung etwaiger Verformungen in dem Meßkörper 65 und Referenzkörper 66 selbst ist $\Delta L_M = X_{rel}$, und somit

$$\ddot{X}_{rel} = \ddot{F}_M / C_M \quad (19).$$

Durch Einsetzen von (17) und (19) ind (14) erhält man :

$$F = F1 + A1 \cdot F1 + (M1/M2) \cdot (F2 + A2\dot{F}2 - F3 - A3 \cdot \dot{F}3) + (M1/C1) \cdot \ddot{F}M \quad (20),$$

wobei F1, F2, F3 und $F_M$ die Meßsignale von den Dehnungsmeßstreifen 67, 68, 69, 70 sind und A1, A2, A3, M1, M2 und C1 Konstanten darstellen.

Diese Gleichung (20) beschreibt die Bewegung der Massen M1 und M2 unter der Wirkung der Kraft F(t). Aus der Bewegung der Massen wird die im Zeitpunkt t wirkende Kraft F(t) berechnet.

Fig. 9 zeigt ein Ausführungsbeispiel für eine Auswerteschaltung, mit der die abgegriffenen Signale F1, F2, F3 und FM entsprechend der Formel (20) verarbeitet werden können. Einem Summationsglied 72 wird das Signal F1 direkt zugeführt, das Signal F2 nach Multiplikation mit dem Verhältnis der beiden Massen M1 und M2 im Multiplizierer 73, das Signal F3 nach Vorzeichenumkehr im Inverter 74 und Multiplikation in 73. Die Dämpfungskräfte werden durch die Schaltungszweige mit Differenziergliedern 78, Multipliziergliedern 75, 76, 77, D2 und D3 zusätzlich mit Multiplikation in 73 und D3 invertiert in 74, ermittelt und dem Summierer zugeführt. Die Relativbeschleunigung wird aus dem Signal FM durch zweimalige Differentation in 78 und anschließende Multiplikation in 79 errechnet und im Summierer 72 den anderen Gliedern der Gleichung (20) hinzugefügt. Die Summation der Eingangswerte im Summierer ergibt ein der Kraft F proportionales Signal und wird im Anzeigeglied 80 zur Anzeige gebracht.

Auch hier ist anstelle der Auswerteschaltung mit getrennten analogen Schaltungselementen eine entsprechende digitale Signalverarbeitung nach Formel (20) in einem Mikroprozessor od.dgl. Rechner, unter vorhergehender Analog-Digital-Umwandlung der Signale, möglich.

Auch hier können, falls eine Berücksichtigung der Dämpfungskräfte nicht erforderlich ist, die Auswertung durch Weglassung der Schaltungs- oder Rechenzweige mit den Gliedern 75, 76, 77 weggelassen und die Auswertung dadurch vereinfacht werden.

Die oben angegebene Herleitung der Gleichung (20) beruht auf der vereinfachten Annahme, daß eine elastische Verformung nur in den Kraftmeßelementen 63, 64 und nicht in den Massen 65, 66 auftritt. In Wirklichkeit können durch Verformungen innerhalb des Meßkörpers 65 und des Referenzkörpers 66 zusätzliche Verlagerungen von deren Schwerpunkten S1 und S2 auftreten, die vom Dehnungsmeßstreifen 67 nicht erfaßt werden. Dies kann bei extremer Meßgenauigkeit zu einer fehlerhaften Erfassung der Relativbewegungen führen.

Um diesen Fehler zu minimieren, sollte durch konstruktive Maßnahmen dafür gesorgt werden, daß die Verformungen innerhalb des Meßkörpers 65 und Referenzkörpers 66 klein gegenüber den Verformungen in den Kraftmeßelementen 63 und 64 sind. Dies kann bei der Ausführungsform nach Fig. 6 durch Wahl geeigneter Materialien mit stark unterschiedlichem Elastizitätsmodul für die Kraftmeßelemente 63, 64 einerseits und den Meßkörper 65 und Referenzkörper 66 andererseits geschehen.

Gemäß Fig. 10 und 11 können aber Meßkörper 65 und Referenzkörper 66 aber auch einstückig mit den Kraftmeßelementen 63,64 zusammenhängen und aus dem gleichen Material wie diese bestehen. Gemäß Fig.10 handelt es sich dann nur um verschiedene Abschnitte eines einheitlichen zylindrischen Körpers, während gemäß Fig. 11 die Kraftmeßelemente 63, 64 durch dünnwandig-rohrförmige Formgebung eine höhere Verformbarkeit haben. In beiden Fällen ist es vorteilhaft, wenn der die Relativbewegung zwischen Meß- und Referenzkörper erfassende Dehnungsmeßstreifen 67 eine Länge L5 hat, die größer ist als die Länge L2 des Kraftmeßelementes 63 und dem Abstand der Schwerpunkte S1 und S2 von Meß- und Referenzkörper entspricht.

Die Ausführungsformen nach Fig. 6, 10 und 11 weisen im Grunde nur einen einzigen der Meßkraft F ausgesetzten stabförmigen Körper auf, der sich gegen das Gehäuse abstützt. Dieser Körper ist über seine Länge in verschiedene Abschnitte unterteilt, nämlich dem ersten Massenabschnitt oder Meßkörper 65, auf den die Kraft F einwirkt, einen ersten Verformungsabschnitt oder Kraftmeßelement 63, einen zweiten Massenabschnitt oder Referenzkörper 66, und einen zweiten Verformungsabschnitt oder Kraftmeßelement 64. Signalgeber in Form von Dehnungsmeßstreifen sind an den Verformungsabschnitten 63, 64 mindestens an den Stellen angebracht, wo diese an die Massenabschnitte 65, 66 angrenzen. Es ist nicht unbedingt erforderlich, daß sich die Verformungsabschnitte 63, 64 in ihrer Verformbarkeit von den Massenabschnitten 65, 66 unterscheiden. Deshalb kann der gesamte Körper gemäß der Ausführungsform nach Fig. 10 aus einem einheitlichen Material mit konstantem Querschnitt bestehen, wobei die Grenzen zwischen den Massenabschnitten 65, 66 und den Verformungsabschnitten 63, 64 nur durch die Position der Dehnungsmeßstreifen definiert ist.

Vorteilhafter ist es jedoch, wenn die Verformungsabschnitte 63, 64 eine höhere Verformbarkeit als die Massenabschnitte 65, 66 aufweisen. Zu diesem Zweck kann gemäß Fig. 6 der gesamte stabförmige Körper aus Abschnitten aus unterschiedlichem Material mit unterschiedlichen Elastizitätseigenschaften zusammengesetzt sein. Es ist stattdessen auch möglich, daß der gesamte stabförmige Körper einstückig aus dem gleichen Material besteht, welches jedoch abschnittsweise derart behandelt ist, daß es unterschiedliche Verformungseigenschaften aufweist. Z.B. kann der Körper aus Kunststoff bestehen, der abschnittsweise unterschiedliche Shorehärte aufweist. Die höhere Verformbarkeit der Verformungsabschnitte 63, 64 kann auch durch entsprechende Formgebung erzielt werden, so daß diese Abschnitte einen kleineren Querschnitt als die Massenabschnitte 65, 66 aufweisen, z.B. durch die in Fig. 11 dargestellte rohrförmige Ausbildung. Die genannten Maßnahmen der Materialwahl und Formgebung können auch miteinander kombiniert werden.

Um die Meßvorrichtung gegen seitliche Verformungsoder Beschleunigungskräfte möglichst unempfindlich zu machen, kann z.B. bei der Ausführungsform nach Fig. 6 der Referenzkörper oder zweite Massenabschnitt 66 seitlich durch eine Membran gegen das Gehäuse 61 abgestützt sein, wobei diese Membran in Richtung der Meßkraft F leicht verformbar, aber in der dazu senkrechten Richtung möglichst steif sein soll.

## Patentansprüche

1. Druck- oder Kraftmeßvorrichtung mit einem Gehäuse (1), 61), einem mit dem Meßdruck oder der Meßkraft beaufschlagten Meßkörper vorgegebener Masse (3, 65), einem vom Meßdruck oder der Meßkraft nicht beaufschlagten Referenzkörper vorgegebener Masse (11, 66), einem ersten elastisch verformbaren Kraftmeßelement (5, 64), über das der Meßkörper (11) oder der Referenzkörper (66) gegen das Gehäuse auslenkbar abgestützt ist, einem zweiten elastisch verformbaren Kraftmeßelement (13, 63), über das der Meßkörper und der Referenzkörper auslenkbar gegeneinander abgestützt sind, Signalgebern (9; 15; 67, 70) zum Erzeugen von der Verformung der Kraftmeßelemente entsprechenden Meßsignalen, und einer die Meßsignale verarbeitenden Auswerteschaltung dadurch **gekennzeichnet**, daß ein der Verformung des ersten Kraftmeßelementes (5, 64) entsprechendes erstes Meßsignal und ein der Verformung des zweiten Kraftmeßelementes (13, 63) entsprechendes, die Auslenkung des Meßkörpers und Referenzkörpers relativ zueinander wiedergebendes, zweites Meßsignal getrennt der Auswerteschaltung zuführbar ist, und daß die Auswerteschaltung Rechenglieder (21, 23, 17) zur Bildung des zweiten zeitlichen Differentials des zweiten Meßsignals und zur additiven Verknüpfung dieses zweiten zeitlichen Differentials mit dem undifferenzierten ersten und zweiten Meßsignal aufweist.

2. Vorrichtung nach Anspruch 1, dadurch **gekennzeichnet**, daß die Auswerteschaltung zusätzlich Rechenglieder (31, 33, 35) zur Bildung des ersten zeitlichen Differentials der Meßsignale zum Berücksichtigen des Dämpfungsverhaltens des Systems aufweist.

3. Vorrichtung nach Anspruch 1, dadurch **gekennzeichnet,** daß an mindestens einem der Kraftmeßelemente (13) zwei Signalgeber (14, 16) in der Nähe der beiden Enden des Kraftmeßelementes (13) angeordnet sind.

4. Meßvorrichtung nach Anspruch 3, dadurch **gekennzeichnet**, daß zusätzlich ein sich über die ganze Länge des Kraftmeßelementes (13) erstreckender Signalgeber (15) vorgesehen ist.

5. Vorrichtung nach einem der Ansprüche 1 bis 4, dadurch **gekennzeichnet**, daß der Meßkörper durch das erste Kraftmeßelement gegen den Referenzkörper und dieser durch das zweite Kraftmeßelement gegen das Gehäuse abgestützt ist.

6. Meßvorrichtung nach Anspruch 5, dadurch **gekennzeichnet**, daß Meßkörper, Referenzkörper und Kraftmeßelemente einstückig aus dem gleichen Material hergestellt sind.

7. Vorrichtung nach einem der Ansprüche 1 bis 6, dadurch **gekennzeichnet**, daß die Kraftmeßelemente durch unterschiedliches Material oder unterschiedliche Formgebung eine höhere Verformbarkeit als der Meßkörper und der Referenzkörper aufweisen.

8. Vorrichtung nach Anspruch 1, dadurch **gekennzeichnet**, daß der Meßkörper (3, 65), der Referenzkörper (11, 66) und das erste und zweite Kraftmeßelement (5, 64; 13, 63) als Abschnitte eines stab- oder blockförmigen Körpers ausgebildet sind, dessen eine Stirnfläche dem Meßdruck oder der Meßkraft ausgesetzt und

EP 0 407 413 B1

dessen andere Stirnfläche gegen das Gehäuse abgestützt ist, wobei der Körper über seine Länge folgende Abschnitte aufweist : einen dem Meßdruck oder der Meßkraft (11) ausgesetzten ersten Massenabschnitt (65) von vorgegebener Masse, einen ersten, elastisch verformbaren Verformungsabschnitt (63), einen zweiten Massenabschnitt (66) von vorgegebener Masse und einen zweiten elastisch verformbaren Verformungsabschnitt (64), und daß am ersten und zweiten Verformungsabschnitt (63, 64) mindestens je ein Dehnungsmeßstreifen als erster bzw. zweiter Signalgeber (67, 68, 69, 70) angeordnet ist.

9. Vorrichtung nach Anspruch 8 , dadurch **gekennzeichnet,** daß die Signalgeber (68, 69, 70) sich nur über einen kleinen Teil der Länge jedes Verformungsabschnitts (63, 64) erstrecken und an der Grenze zwischen dem jeweiligen Verformungsabschnitt (63, 64) und dem angrenzenden Massenabschnitt (65, 66) angeordnet sind.

10. Vorrichtung nach Anspruch 8 , dadurch **gekennzeichnet**, daß mindestens der erste Verformungsabschnitt (63) einen Signalgeber (67) aufweist, der sich über mindestens die gesamte Länge des Verformungsabschnitts (63) erstreckt.

11. Vorrichtung nach Anspruch 10 , dadurch **gekennzeichnet**, daß sich der Signalgeber (67) über den gesamten Längenabstand zwischen den Massenschwerpunkten (51, 52) des ersten und zweiten Massenabschnitts (65, 66) erstreckt.

12. Vorrichtung nach Anspruch 8 , dadurch **gekennzeichnet**, daß der erste und zweite Verformungsabschnitt (63, 64) durch eine kleinere Querschnittsfläche eine höhere Verformbarkeit aufweisen  als der erste und zweite Massenabschnitt (65, 66).

13. Vorrichtung nach Anspruch 8 , dadurch **gekennzeichnet**, daß der erste und zweite Verformungsabschnitt (63, 64) aus einem Material mit höherer elastischer Verformbarkeit bestehen als der erste und zweite Massenabschnitt (65, 66).

14. Vorrichtung nach Anspruch 8 , dadurch **gekennzeichnet**, daß der erste und zweite Verformungsabschnitt (63, 64) die gleiche Verformbarkeit und den gleichen Querschnitt wie der erste und zweite Massenabschnitt aufweisen und die Grenzen zwischen den Verformungsabschnitten und den Massenabschnitten durch die Lage der Signalgeber (68, 69, 70) definiert ist.


## Claims

1. A pressure or force measuring device comprising a housing (1, 61), a measuring body (3, 65) of pretermined mass subjected to the pressure or force to be measured, a reference body (11, 66) of predetermined mass not subjected to the pressure or force to be measured, a first elastically deformable force measuring element (5, 64) via which the measuring body or the reference body is deflectably supported with respect to the housing, a second elastically deformable force measuring element (13, 63) via which said measuring body and reference body are supported against each other, signal generators (9, 15, 67, 70) for generating measuring signals corresponding to the deformation of the force measuring elements, and an evaluating circuit for processing the measuring signals, **characterized** in that a first measuring signal corresponding to the deformation of the first force measuring element (5, 64) and a second measuring signal corresponding to the deformation of the second force measuring element (13, 63) and representing the deflection of the measuring body and reference body relative to each other are separately supplied to said evaluating circuit, and that the evaluating circuit comprises computing means (21, 23, 17) for forming the second time differential of the second measuring signal and for additive linking of said second time differential with the undifferentiated first and second measuring signals.

2. Device according to claim 1, **characterized** in that the evaluating circuit additionally comprises computing members (31, 33, 34, 35) for forming the first time differential of the measuring signals to take account of the damping behaviour of the system.

3. Device according to claim 1, **characterized** in that at least on one of the force measuring elements (13) two signal generators (14, 16) are arranged in the vicinity of the two ends of the force measuring element (13).

4. Measuring device according to claim 3 , **characterized** in that in addition a signal generator (15) extending over the entire length of the force measuring element (13) is provided.

5. Device according to any one of claims 1 to 4 , **characterized** in that the measuring body is supported by the first force measuring element with respect to the reference body and the latter is supported by the second force measuring element with respect to the housing.

6. Measuring device according to claim 5, **characterized** in that the measuring body, reference body and force measuring elements are made integrally from the same material.

7. Device according to any one of claims 1 to 6 , **characterized** in that the force measuring elements, by different material or different configuration, have a higher deformability than the measuring body and the refer-

8

ence body.

8. Device according to claim 1, **characterized** in that said measuring body (3, 65), reference body (11, 66) and first and second force measuring elements (5, 64; 13, 63) are formed as sections of a rod or block shaped body having its one end face exposed to the pressure or force to be measured and its other end face supported against the housing, said body comprising the following portions over its length: A first mass portion (65) of predetermined mass, a first elastically deformable deformation portion (63), a second mass portion (66) of predetermined mass and a second elastically deformable deformation portion (64), and that each of said first and second deformation portions (63, 64) has at least one strain gauge attached to it to act as said first and second signal generator (67, 68, 69, 70), respectively.

9. Device according to claim 1, **characterized** in that the signal generators (68, 69, 70) extend only over a small portion of the length of each deformation portion (63, 64) and are arranged at the boundary between the respective deformation portion (63, 64) and the adjoining mass portion (65, 66).

10. Device according to claim 7 or 8 , **characterized** in that at least the first deformation portion (63) comprises a signal generator (67) which extends over at least the entire length of the deformation portion (63).

11. Device according to claim 10 , **characterized** in that the signal generator (67) extends over the entire length distance between the mass centres (S1, S2) of gravity of the first and second mass portions (65, 66).

12. Device according to claim 8 , **characterized** in that the first and second deformation portions (63, 64) due to a smaller cross-sectional area have a higher deformability than the first and second mass portions (65, 66).

13. Device according to claim 8 , **characterized** in that the first and second deformation portions (63, 64) consist of a material of higher elastic deformability than the first and second mass portions (65, 66).

14. Device according to claim 8 , **characterized** in that the first and second deformation portions (63, 64) have the same deformability and the same cross-section as the first and second mass portions and the borders between the deformation portions and the mass portions are defined by the position of the signal generators (68, 69, 70).


**Revendications**

1. Dispositif manométrique ou dynamométrique comportant un boîtier (1, 61), un corps de mesure (3, 65) de masse prédéterminée sur lequel agit la pression ou à la force à mesurer, un corps de référence (11, 66) de masse prédéterminée qui n'est pas soumis à la pression ou à la force à mesurer (5, 64), un premier élément dynamométrique élastiquement déformable par l'intermédiaire duquel le corps de mesure (3) ou le corps de référence (66) est appuyé contre le boîtier de manière à pouvoir dévier, un second élément dynamométrique (13, 63) élastiquement déformable par l'intermédiaire duquel le corps de mesure et le corps de référence sont appuyés l'un contre l'autre de manière à pouvoir dévier, des générateurs de signaux (9, 15, 67. 70) pour produire des signaux de mesure correspondant à la déformation des éléments dynamométriques, et un circuit de traitement pour le traitement des signaux de mesure, caractérisé en ce qu'un premier signal de mesure correspondant à la déformation du premier élément dynamométrique (5, 64) et un second signal de mesure correspondant à la déformation du second élément dynamométrique (13, 63) et représentatif de la déviation du corps de mesure et du corps de référence l'un par rapport à l'autre, peuvent être amenés séparément au circuit de traitement, et en ce que le circuit de traitement présente des éléments de calcul (21, 23, 17) pour l'élaboration de la dérivée seconde dans le temps du second signal de mesure et pour combiner par addition cette dérivée seconde dans le temps et les premier et second signaux de mesure non différenciés.

2. Dispositif selon la revendication 1, caractérisé en ce que le circuit de traitement présente en outre des éléments de calcul (33, 34, 35) pour l'élaboration de la dérivée première dans le temps des signaux de mesure afin de tenir compte du comportement d'amortissement du système.

3. Dispositif selon la revendication 1, caractérisé en ce que deux générateurs de signaux (14, 16) sont placés sur au moins l'un des éléments dynamométriques (13), à proximité des deux extrémités de l'élément dynamométrique (13).

4. Dispositif de mesure selon la revendication 3, caractérisé en ce qu'il est en outre prévu un générateur de signaux (15) qui s'étend sur toute la longueur de l'élément dynamométrique (13).

5. Dispositif selon l'une des revendications 1 à 4, caractérisé en ce que le corps de mesure est appuyé par l'intermédiaire du premier élément dynamométrique contre le corps de référence et que celui-ci est appuyé contre le boîtier par l'intermédiaire du second élément dynamométrique.

6. Dispositif de mesure selon la revendication 5, caractérisé en ce que le corps de mesure, le corps de référence et les éléments dynamométriques sont fabriqués d'une seule pièce à partir du même matériau.

7. Dispositif selon les revendications 1 à 6, caractérisé en ce que les éléments dynamométriques présentent, par l'emploi d'un matériau différent ou par une configuration différente, une aptitude à la déformation plus élevée que celle du corps de mesure et du corps de référence.

8. Dispositif selon la revendication 1, caractérisé en ce que le corps de mesure (3, 65), le corps de référence (11, 66) et les premier et second éléments dynamométriques (5, 64 ; 13, 63) sont conçus en tant que parties d'un corps en forme de barre ou de lingot, dont une face est soumise à la pression ou à la force à mesurer et dont l'autre face est appuyée contre le boîtier, le corps présentant sur sa longueur les parties suivantes : une première partie de masse (65) de masse prédéterminée soumise à la pression ou à la force (11) à mesurer, une première partie à la déformation (63) élastiquement déformable, une seconde partie de masse (66) de masse prédéterminée et une seconde partie à déformation (64) élastiquement déformable, et en ce qu'il est prévu sur la première et sur la seconde partie à déformation (63, 64) au moins chaque fois un extensomètre en tant que premier ou bien second générateur de signaux (67, 68, 69, 70).

9. Dispositif selon la revendication 8, caractérisé en ce que les générateurs de signaux (68, 69, 70) ne s'étendent que sur une petite partie de la longueur de chaque partie à déformation (63, 64) et qu'ils sont placés à la limite entre chaque partie à déformation (63, 64) et la partie de masse (65, 66) adjacente.

10. Dispositif selon la revendication 8, caractérisé en ce qu'au moins la première partie à déformation (63) présente un générateur de signaux (67) qui s'étend sur au moins toute la longueur de la partie à déformation (63).

11. Dispositif selon la revendication 10, caractérisé en ce que le générateur de signaux (67) s'étend sur toute la distance longitudinale entre les points de gravité (S1, S2) des première et seconde parties de masse (65, 66).

12. Dispositif selon la revendication 8, caractérisé en ce que les première et seconde parties à déformation (63, 64) présentent, de par une plus petite aire de la section transversale, une aptitude à la déformation plus élevée que les première et seconde parties de masse (65, 66).

13. Dispositif selon la revendication 8, caractérisé en ce que les première et seconde parties à déformation (63, 64) se composent d'un matériau présentant une aptitude à la déformation élastique supérieure à celle des première et seconde parties de masse (65, 66).

14. Dispositif selon la revendication 8, caractérisé en ce que les première et secondes parties à déformation (63, 64) présentent la même aptitude à la déformation et la même section transversale que les première et seconde parties de masse et que les limites entre les parties à déformation et les parties de masse sont définies par la position des générateurs de signaux (68, 69, 70).

FIG.1

$F_m$

FIG.2

FIG.3

FIG.4

FIG.5

FIG.6

FIG.8

## FIG.7a

## FIG.7b

**FIG.9**

**FIG.10**

**FIG.11**